# EUROPEAN PATENT SPECIFICATION

(11) **EP 2 615 905 B1**
(45) Date of publication and mention of the grant of the patent: **11.10.2017**
(21) Application number: 11731496.3
(22) Date of filing: 19.05.2011
(51) Int. Cl.: A01G 9/02

(54) **STABILIZED NATURAL LICHEN SUPPORT FOR MAINTENANCE-FREE VERTICAL GARDENS**
STABILISIERTER NATÜRLICHER FLECHTENTRÄGER FÜR PFLEGEFREIE VERTIKALE GÄRTEN
SUPPORT DE LICHEN NATUREL STABILISÉ POUR DES JARDINS VERTICAUX SANS MAINTENANCE

(30) Priority: 25.06.2010 IT BG20100035
(43) Date of publication of application: 24.07.2013
(73) Proprietor: Laprocina, Stefano, 20865 Usmate Velate (MB) (IT)
(72) Inventor: Ferone, Giuseppina, 20864 Agrate Brianza (MB) (IT); Laprocina, Stefano, 20865 Usmate Velate (MB) (IT)
(74) Representative: Tansini, Elio Fabrizio
(86) International application number: PCT/IB2011/001144
(87) International publication number: WO 2011/161502

(56) References cited:
- EP-A1- 0 231 416
- JP-A- 3 232 425
- JP-A- 4 112 723
- JP-A- 6 105 616
- JP-A- 2004 222 549

## Description

The present invention relates to a new support on whose surface is applied a natural lichen and the method for the realization of the same to create indoor vertical gardens, simple and easy to be maintained. At the state of the art, the vertical gardens or green walls are known as new indoor and outdoor architecture concept. Said gardens are made up of an assembly of plants, chosen on the basis of technical indications and variable characteristics as the climate and the position. Said plants are fixed on the vertical wall and are supported by suitable structures, generally modular and very complex structures realized depending on the project needs. In this way, the plants remain at distance from the wall to guarantee the natural change of air and in such a way that the wall itself is not compromised. In the vertical gardens known according to the state of the art, the plants grow on the soil or on materials, which can have the same function as the fabric, exploiting the hydro-culture techniques. In particular, some of these gardens are able to store water through a felt layer, supplying a drip irrigation system which provides an optimum microclimate for the plants, while another system in the lower portion collects the natural residues of the vertical garden. The irrigation and fertilization system is generally completely automatic and autonomous and is an integral part of the wall system, which has to be periodically checked and rebuilt. As it is easily understood, the wall layout of such vertical gardens results extremely complex and not easy to be realized. In addition, a correct supply of specific artificial light is essential to guarantee a proper growth of the plants.

These kinds of vertical gardens have therefore a series of disadvantages. One who desires to start his own vertical garden has in fact to consider some important factors. It is to be considered the humid and so heavy soil for the arrangement of the plants, and the load resulting which has to be supported by the wall on which it is to be installed, in order not to cause structural damages. In most cases, in fact, it is needed to use a material functioning as medium in place of the natural soil. Moreover, from the point of view of maintenance, since nutrients are consumed by the plants, the compost has to be renewed constantly, above all during the vegetative period of the plants. Also the choice of the kind of the plants depends on the load arrangement and on the irrigation system which can be applied to the wall and on the kind of irradiance obtainable. The irrigation itself can be in fact provided by means of very different systems to attain a very optimal and sustainable solution, also depending on the needs and dimensions of the same garden. Another disadvantage of the common vertical gardens is given by the growth of the same plants, which have to be periodically pruned and/or substituted if damaged or suffering.

The present invention solves the technical above-listed problems allowing to obtain vertical gardens, which can be applied on every surface, with no maintenance needed, as in document JP 4 112723 A, which discloses a support according to the preamble of claim 1. Such gardens are provided by using a stabilized natural lichen which does not need any treatment, any irrigation system, any phyto-stimulating illumination, any maintenance, which is applied to a support by means of a new method, object of the present invention, as defined in the attached claims. Said support is applied on the wall as a real vertical garden, but can be positioned on inclined, curved or horizontal surfaces.

These and other advantages will be better highlighted in the description of the method to provide the invention, which refers specifically to table 1-3, figures 1 to 3, in which it is represented an absolutely non-limiting, preferred embodiment of the present invention. In particular:
Fig. 1 shows an isometric axonometry of the object of the present invention;
Fig. 2 shows a front and side view of the object of the present invention;
Fig. 3 shows a front and side view of the object of the present invention obtained according to the described methodologies.

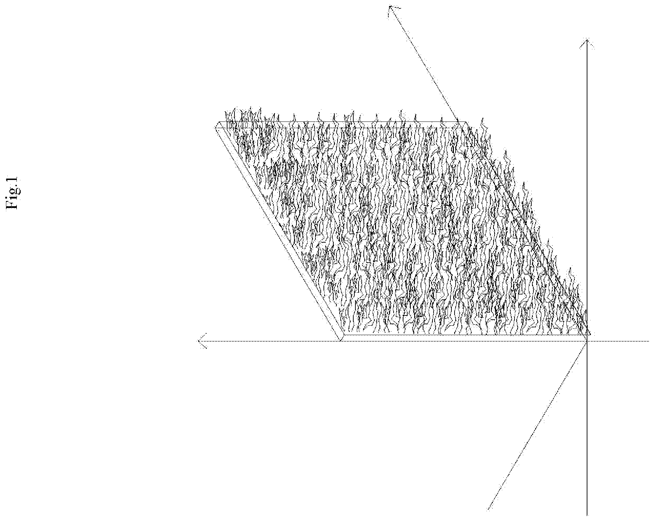

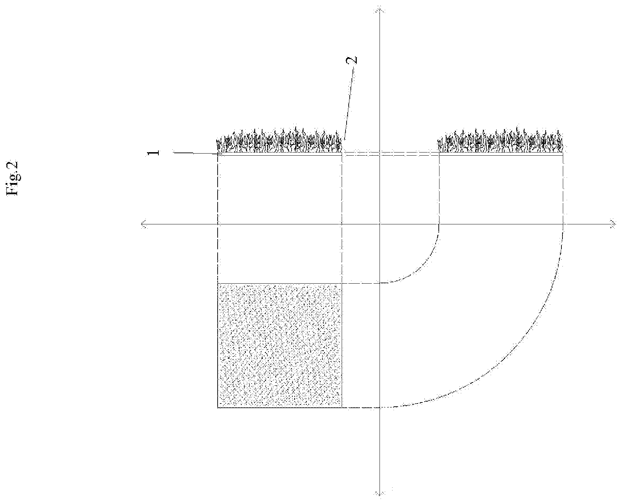

Referring to said figures, it is possible to recognize the portion made up of the support (1, fig. 1 and fig. 2), which is very thin and so easy to be manipulated for the application on any type of wall and the portion made up of the outer vegetal part which is firmly anchored on the support itself (2, fig.1 and fig. 2), according to a method, object of the present invention as well. An example of the application of said support on the vertical wall is shown in figure 2.

The vegetal part which is used is a stabilized lichen, picked up in the under-wood. Said lichen is treated, just after picking, with a mechanic method which stabilizes it in form and growth. Such method can comprise also dye which, in addition to the softness peculiar to the lichen, gives it a color chosen among a very large nuance palette. The process of stabilizing and coloring is provided by means of non-toxic substances, which maintain the lichen completely natural and give it antibacterial and fire-retardant properties. In order to be maintained in optimal conditions, said lichen has to be arranged in ambients with a relative humidity not lower than 30-40%. The relative humidity (or UR) is the ratio measured in percent between the steam quantity contained in an air mass and the maximum quantity of steam, that the same air mass can contain in the same temperature and pressure conditions (saturation). One of the substantial features of the present invention relates to the fixing method of said lichen for the realization of vertical gardens. It consists of a first step, in which the lichen is cut in the not noble portion of the roots, in order to obtain a length between 2 and 7 cm. The cut is carried out by means of a mechanic cutting system with sawed blades. The lichen is subsequently cleaned using compressed air which frees it partially from the residues due to the picking in the woods. At the same time, it is prepared a die which can have different dimensions and be also cut to size, on which a detaching product is fixed which allows an easy removing at the end of the process. The mixture which is cast in said die is completely free of toxic substances and, in a first alternative, is made up of a synthetic resin mix with natural water as carrier or with suitable additive to obtain coloration, additional functions or smells, mixed in suitable stoichiometric ratios. The two elements are stirred for some minutes, until a fluid and homogeneous mass is obtained to be cast in the dies. The stirring has to be carried out for at least 2 minutes so that the treatment does not develop any toxic substance either for inhalation or contact and/or ingestion. The next step is the very slow casting of the fluid mass in the highest portion of the die, to prevent the formation of air bubbles. The cast mass can be vibrated on a suitable vibrating table in order to guarantee a greater compactness. Subsequently, in the following 10 - 12 minutes, the moss is inserted according to an exact laying scheme. The not noble portion of the lichen stock is sunk in the resin, by putting a stock next to the other one avoiding to leave empty spaces. The density resulting from this kind of insertion is equal to 3 - 4 kg/mq. At the end of the inserting step, the lichen is to be pressed and fixed on the bottom. The die has to dry at ambient temperature for 8 - 12 hours before its opening and removing its content from it. Once this lichen tile is obtained, the finish of the edges is carried out through a side filing.

This new technique allows to obtain supports comprising the lichen permanently, which if applied vertically on the walls are able to build a vertical garden which is stable in time without needing any maintenance.

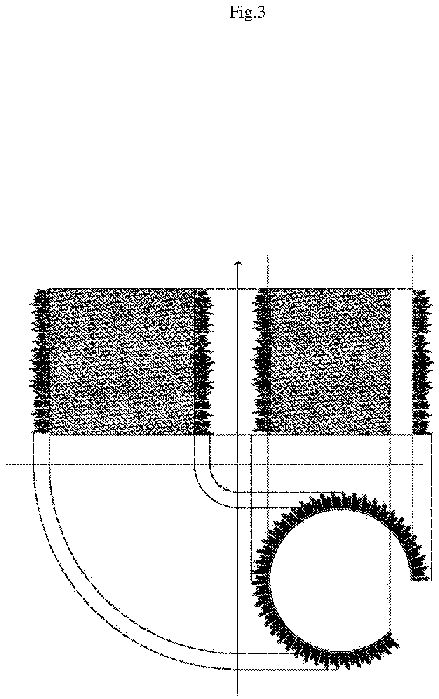

A second alternative is represented by the application of the lichen on technical fabric. In order to obtain this embodiment, it is created a fabric template with thickness variable between 2 and 5 mm, such that it has a stiff density but also an optimum flexibility. According to yet known bonding techniques, on the whole surface it is then spread an uniform layer of bi-component and mono-component bonding agent, as well as heat glue, and with catalysts, possibly with additives, also to modify the catalyzing times, and on it, the noble portion of the moss, treated as previously described, is fixed regularly. Therefore this process allows to obtain very flexible supports which allow to use the system to create objects with sinuous and soft forms (fig. 3). A third alternative is represented by a support obtained by means of a completely non-toxic mixture of silicone rubber, mixed with a catalyst in suitable stoichiometric ratios, without developing any toxic reaction both during working and upon contact and/or ingestion. After mixing the components, it is obtained a fluid mass to be cast in the dies. A slow cast of the mass thus obtained is then carried out in the highest portion of the die, to avoid the formation of air bubbles. In the following 10 - 12 minutes, the moss is inserted according to yet described modes, guaranteeing an inserting density equal to 3 - 4 kg/mq. At the end of the insertion the moss has to be pressed and fixed on the bottom of the die. This latter has to dry at ambient temperature for at least 1 hour before its opening, or for different times if obtained with catalysts which modify the normal drying time.

Another alternative is obtained by using a completely non-toxic mixture of foam which is extended or cast inside the die in suitable quantity, without developing any toxic reaction both during working and upon contact and/or ingestion. Subsequently, in the following 10 - 12 minutes the moss is inserted according to the just described laying scheme. At the end of the insertion the moss has to be pressed and fixed on the bottom. The die has to dry at ambient temperature for at least 1 hour before its opening or for different times if obtained with catalysts which modify the normal drying time.

## Claims

1. Support to provide vertical gardens comprising a stabilized natural lichen on the surface of the same, which does not need any maintenance, **characterized in that** it further comprises one of the elements chosen between a mix of synthetic resin and water or additive, or a flexible fabric on whose surface it is spread an uniform layer of bi- or mono-component bonding agent and suitable catalyst, or a mix of silicone rubber and suitable catalyst or a mixture of foam.

2. Support, according to claim 1, **characterized in that** the stabilized natural lichen is fixed permanently inside the support itself.

3. Support according to any one of the preceding claims, wherein the final length of the lichen is between 2 and 7 cm.

4. Method to provide a stabilized natural lichen support **characterized by** the following steps:
- cutting the stabilized natural lichen in the not-noble portion of the roots;
- preparing the support;
- inserting lichen stocks;
- fixing the lichen to the support with one of the elements chosen between a mix of synthetic resin and water or additive, or a flexible fabric on whose surface it is spread an uniform layer of bi- or mono-component bonding agent and suitable catalyst, or a mix of silicone rubber and suitable catalyst or a mixture of foam;
- finishing the support.

5. Method according to claim 4, wherein said preparation of the support comprises:
- preparing the die applying a detaching product;
- preparing the non-toxic resinous mixture;
- casting in the die;
wherein the fixing of the lichen stocks comprises:
- fixing and pressing the lichen on the bottom of the die;
wherein, finally, the finishing of the support comprises:
- drying the die;
- removing from the die;
- finishing the edges.

6. Method according to claim 4**,** wherein said preparation of the support comprises:
- cutting the template of technical fabric;
- spreading an uniform layer of bi-component bonding agent on the whole surface of the fabric.

7. Method according to claim 4, **characterized in that** said lichen cutting is carried out by means of a mechanic cutting system with sawed blades.

8. Method according to claim 5**,** wherein the components of the mixture are stirred for some minutes, until a fluid and homogeneous mass is obtained to be cast in the dies.

9. Method according to claim 4, **characterized in that** said insertion of lichen is carried out from the not noble portion of the lichen stock in the resin, putting a stock next to the other one with density equal to 3 - 4 kg/mg.

10. Method according to claim 4, **characterized in that** said drying step lasts 1 hour or depends on the catalyst.

11. Method according to claim 4, wherein the cast mass is vibrated on a suitable vibrating table to obtain compactness.

## Patentansprüche

1. Träger, um vertikale Gärten bereitzustellen, umfassend eine stabilisierte natürliche Flechte auf dessen Oberfläche, die keine Pflege benötigt, **dadurch gekennzeichnet, dass** er zudem eins der Elemente umfasst, ausgewählt aus einer Mischung von Kunstharz und Wasser oder einem Zusatzstoff oder einem flexiblen Gewebe, auf dessen Oberfläche eine gleichmäßige Schicht aus einem zwei- oder einkomponentigen Bindemittel und einem geeigneten Katalysator verteilt ist, oder einer Mischung aus Silikonkautschuk und einem geeigneten Katalysator oder einer Mischung aus Schaum.

2. Träger nach Anspruch 1, **dadurch gekennzeichnet, dass** die stabilisierte natürliche Flechte dauerhaft im Träger fixiert ist.

3. Träger nach einem der vorhergehenden Ansprüche, wobei die abschließende Länge der Flechte zwischen 2 und 7 cm beträgt.

4. Verfahren zur Bereitstellung eines stabilisierten natürlichen Flechtenträgers, **gekennzeichnet durch** die folgenden Schritte:
- Schneiden der stabilisierten natürlichen Flechte in den nicht edlen Abschnitt der Wurzeln;
- Vorbereiten des Trägers;
- Einfügen der Flechtenstöcke;
- Fixieren der Flechte am Träger mit einem der Elemente, ausgewählt aus einer Mischung von Kunstharz und Wasser oder einem Zusatzstoff oder einem flexiblen Gewebe, auf dessen Oberfläche eine gleichmäßige Schicht aus einem zwei- oder einkomponentigen Bindemittel und einem geeigneten Katalysator verteilt ist, oder einer Mischung aus Silikonkautschuk und einem geeigneten Katalysator oder einer Mischung aus Schaum;
- Endbearbeiten des Trägers.

5. Verfahren nach Anspruch 4, wobei das Vorbereiten des Trägers umfasst:
- Vorbereiten der Form durch Anbringen eines ablösenden Produkts;
- Vorbereiten der ungiftigen Harzmischung;
- Gießen in die Form,
wobei das Fixieren der Flechtenstöcke umfasst:
- Fixieren und Pressen der Flechte auf dem Boden der Form,
wobei das Endbearbeiten des Trägers zuletzt umfasst:
- Trocknen der Form;
- Herausnehmen aus der Form;
- Endbearbeiten der Ecken.

6. Verfahren nach Anspruch 4, wobei das Vorbereiten des Trägers umfasst:
- Zuschneiden der Vorlage eines Funktionsgewebes;
- Verteilen einer gleichmäßigen Schicht eines Zweikomponentenbindemittels auf der gesamten Gewebeoberfläche.

7. Verfahren nach Anspruch 4, **dadurch gekennzeichnet, dass** das Schneiden der Flechte mittels eines mechanischen Schneidsystems mit Sägeblättern durchgeführt wird.

8. Verfahren nach Anspruch 5, wobei die Komponenten der Mischung einige Minuten lang gerührt werden, bis eine flüssige, gleichmäßige Masse entsteht, die in die Formen gegossen wird.

9. Verfahren nach Anspruch 4, **dadurch gekennzeichnet, dass** das Einfügen der Flechte vom nicht edlen Abschnitt des Flechtenstocks in das Harz durchgeführt wird, indem die Stöcke nebeneinander mit einer Dichte von 3 bis 4 kg/mg eingesetzt werden.

10. Verfahren nach Anspruch 4, **dadurch gekennzeichnet, dass** der Schritt zum Trocknen eine Stunde dauert oder vom Katalysator abhängt.

11. Verfahren nach Anspruch 4, wobei die gegossene Masse auf einem geeigneten Rütteltisch gerüttelt wird, um verfestigt zu werden.

## Revendications

1. Support pour fournir des jardins verticaux comprenant du lichen naturel stabilisé, sur la surface de celui-ci, ne nécessitant pas de maintenance, **caractérisé en ce qu'**il comprend de plus un des éléments choisis entre un mélange de résine synthétique et d'eau ou d'additif, ou un tissu souple sur la surface duquel il est étalé une couche uniforme d'un liant monocomposé ou bicomposé et un catalyseur approprié, ou un mélange de caoutchouc de silicone et un catalyseur approprié ou un mélange de mousse.

2. Support selon la revendication 1, **caractérisé en ce que** le lichen naturel stabilisé est fixé de façon permanente à l'intérieur du support lui-même.

3. Support selon l'une quelconque des revendications précédentes, dans lequel la longueur finale du lichen est comprise entre 2 et 7 cm.

4. Procédé permettant de fournir un support de lichen naturel stabilisé **caractérisé par** les étapes suivantes :
- couper le lichen naturel stabilisé dans la partie non noble des racines ;
- préparer le support ;
- insérer les stocks de lichen ;
- fixer le lichen au support avec un des éléments choisis entre un mélange de résine synthétique et d'eau ou d'additif, ou un tissu souple sur la surface duquel il est étalé une couche uniforme d'un liant monocomposé ou bicomposé et un catalyseur approprié, ou un mélange de caoutchouc de silicone et un catalyseur approprié ou un mélange de mousse ;
- réaliser la finition du support.

5. Procédé selon la revendication 4, dans lequel ladite préparation du support comprend :
- préparer la matrice appliquant un produit détachant ;
- préparer le mélange de résine non toxique ;
- réaliser le moulage dans la matrice ;
dans lequel la fixation des stocks de lichen comprend :
- fixer et presser le lichen sur le fond de la matrice ;
dans lequel, pour finir, la finition du support comprend :
- le séchage de la matrice ;
- le retrait de la matrice ;
- la finition des bords.

6. Procédé selon la revendication 4, dans lequel ladite préparation du support comprend :
- couper le modèle de tissu technique ;
- étaler une couche uniforme d'un liant bicomposé sur toute la surface du tissu.

7. Procédé selon la revendication 4, **caractérisé en ce que** ladite découpe du lichen est effectuée au moyen d'un système de découpe mécanique à lames de scie.

8. Procédé selon la revendication 5, dans lequel les composants du mélange sont agités pendant quelques minutes jusqu'à l'obtention d'une masse fluide et homogène à mouler dans les matrices.

9. Procédé selon la revendication 4, **caractérisé en ce que** ladite insertion de lichen est effectuée à partir de la partie non noble du stock de lichen dans la résine, en plaçant un stock l'un après l'autre d'une densité égale à 3 - 4 kg/mg.

10. Procédé selon la revendication 4, **caractérisé en ce que** l'étape de séchage dure 1 heure ou dépend du catalyseur.

11. Procédé selon la revendication 4, dans lequel la masse moulée est soumise à des vibrations sur une table vibrante appropriée pour obtenir de la compacité.
